# EUROPEAN PATENT SPECIFICATION

(11) **EP 4 355 549 B1**
(45) Date of publication and mention of the grant of the patent: **17.12.2025**
(21) Application number: 22740671.7
(22) Date of filing: 07.06.2022
(51) Int. Cl.: B29C 51/22, B29C 51/36, B29C 33/30, B29C 33/38, B29C 51/34, B29C 48/00, B29C 48/07, B29C 51/02, B29C 39/42

(54) **VACUUM MOLDING ROLL SLEEVE AND METHODS OF MAKING AND USING THE SAME**
VAKUUMFORMROLLENHÜLSE UND VERFAHREN ZUR HERSTELLUNG UND VERWENDUNG DAVON
MANCHON DE ROULEAU DE MOULAGE SOUS VIDE, SES PROCÉDÉS DE FABRICATION ET D'UTILISATION

(30) Priority: 15.06.2021 US 202163210841 P
(43) Date of publication of application: 24.04.2024
(73) Proprietor: 3M Innovative Properties Company, Saint Paul, Minnesota 55133-3427 (US)
(72) Inventor: KOKAISEL, Christopher, R., Saint Paul, Minnesota 55133-3427 (US); DINGELDEIN, Joseph, C., Saint Paul, Minnesota 55133-3427 (US); ANDERSON, Timothy, J., Saint Paul, Minnesota 55133-3427 (US); CLARKE, Graham, M., Saint Paul, Minnesota 55133-3427 (US); PLOTNIKOV, Elizaveta, Y., Saint Paul, Minnesota 55133-3427 (US); KELTON, Christopher, Saint Paul, Minnesota 55133-3427 (US); JONZA, James, M., Saint Paul, Minnesota 55133-3427 (US); SHERMAN, Audrey, A., Saint Paul, Minnesota 55133-3427 (US)
(74) Representative: Mathys & Squire
(86) International application number: PCT/US2022/032504
(87) International publication number: WO 2022/265887

(56) References cited:
- DE-A1- 1 479 829
- DE-A1- 2 150 028
- DE-B- 1 282 293
- US-A- 3 091 808
- US-A- 3 124 840
- US-A- 4 669 969

## Description

### BACKGROUND

Vacuum molding roll sleeves are used in applications where it is desired to draw a material into close contact with a molding surface. Such tools facilitate removal of air trapped between the material and the molding surface by providing vacuum channels that open at the molding surface. Often, design of vacuum molding roll sleeves is complex, time consuming, and expensive. For example the fabrication of a single tool may take several months and cost hundreds of thousands of dollars.

DE 21 50028 A1, DE 12 82 293 B essentially disclose a vacuum molding roll sleeve comprising: a molding surface that is a radially outermost surface of the vacuum molding roll sleeve, a body comprising a mold wall portion disposed between the molding surface and at least one vacuum surface, wherein the molding surface has shaped depressed features, wherein the molding surface has first openings disposed therein at first predetermined positions, wherein each first opening is spaced apart from the at least one vacuum surface by a respective minimum thickness, wherein the at least one vacuum surface has second openings disposed therein at second predetermined positions, wherein the first openings are fluidly connected to the second openings by conduits, wherein the vacuum molding roll sleeve is configured such that at least partial vacuum can be applied to the first openings through the conduits fluidly connected thereto, and wherein the vacuum molding roll sleeve is mountable on a backup roll.

### SUMMARY

The invention is defined by the features of claim 1.

The present disclosure provides vacuum molding roll sleeves can be made using rapid prototyping design and fabrication methods wherein design time can be reduced (e.g., from months to weeks) and fabrication cost may be lowered many-fold. Accordingly, it is possible to quickly design and fabricate vacuum molding roll sleeve designs that would be difficult or impossible to make using other fabrication methods. Should adjustments be desired, they are relatively easier to design and fabricate based an original design template. The vacuum molding roll sleeves are useful in processes such as, for example, continuous cast extrusion forming and continuous thermoforming,

Vacuum molding roll sleeves according to the present disclosure can be fabricated in monolithic forms or in modular forms having multiple components that assemble together to form a vacuum roll. In some embodiments, modular framing can allow for quick changes of one or more vacuum molding roll sleeve sections during a short pause in a manufacturing run.

In one aspect, the present disclosure provides a vacuum molding roll sleeve comprising:
a body comprising a mold wall portion disposed between a molding surface and at least one vacuum surface,
wherein the molding surface has shaped depressed features, wherein the molding surface has first openings disposed therein at first predetermined positions, wherein each first opening is spaced apart from the at least one vacuum surface by a respective minimum thickness,
wherein the at least one vacuum surface has second openings disposed therein at second predetermined positions,
wherein the first openings are fluidly connected to the second openings by conduits,
wherein, on a respective basis, at least some of the conduits are longer than the minimum thickness between the first openings and the vacuum surface to which they are fluidly connected,
wherein the vacuum molding roll sleeve is configured such that at least partial vacuum can be applied to the first openings through the conduits fluidly connected thereto, and
wherein the vacuum molding roll sleeve is mountable on a backup roll.

In another aspect, the present disclosure provides a method of making the vacuum molding roll sleeve according to the present disclosure, the method comprising using an additive manufacturing technique to generate the vacuum molding roll sleeve according to a predetermined design.

In yet another aspect, the present disclosure provides a method of using the vacuum molding roll sleeve according to the present disclosure, the method comprising
introducing a molten thermoplastic polymer onto the molding surface of the vacuum molding roll sleeve while applying vacuum to the at least one vacuum surface; and
separating a molded article from the molding surface under conditions such that the molded article has a shaped surface that is a substantial inverse of at least a portion of the molding surface.

In yet another aspect, the present disclosure provides a method of using the vacuum molding roll sleeve according to the present disclosure, the method comprising
contacting a thermoplastic polymer film with the molding surface of the vacuum molding roll sleeve while applying vacuum to the at least one vacuum surface; and
separating a molded film from the molding surface under conditions such that the molded film has a shaped surface that is a substantial inverse of at least a portion of the molding surface.

As used herein:
"opening" means an aperture or allowing access to a conduit.
"conduit" means a hollow channel for conveying a gas between at least two openings.

Features and advantages of the present disclosure will be further understood upon consideration of the detailed description as well as the appended claims.

### BRIEF DESCRIPTION OF THE DRAWINGS

FIG. 1 is an exemplary schematic perspective view of vacuum molding roll sleeve 100 according to one embodiment of the present disclosure.
FIG. 2 is a schematic enlarged partial cross-sectional view of vacuum molding roll sleeve 100 taken along line 2-2 in FIG. 1.
FIG. 3 is a schematic enlarged partial cross-sectional view of vacuum molding roll sleeve 100 taken along line 3-3 in FIG. 1.
FIG. 4A is a schematic end view of vacuum molding roll sleeve 100 from end 111a.
FIG. 4B is a schematic end view of vacuum molding roll sleeve 100 from end 111b.
FIG. 5 is a schematic enlarged partial cross-sectional view of vacuum molding roll sleeve 100 taken along line 2-2 in FIG. 1.
FIG. 6 is a schematic enlarged view of region 6 in FIG. 1 showing the back surface of vacuum molding roll sleeve 100.
FIG. 7 is a schematic extrusion vacuum molding process according to the present disclosure.
FIG. 8 is an exemplary schematic perspective view of vacuum molding roll sleeve 800 according to one embodiment of the present disclosure.
FIG. 9 is a schematic partial cutaway perspective view of vacuum molding roll sleeve 800.
FIG. 10 is a schematic enlarged partial cross-sectional view of vacuum molding roll sleeve 800 taken along line 10-10 in FIG. 8.
FIG. 11A is a schematic end view of vacuum molding roll sleeve 800 from end 811a.
FIG. 11B is a schematic end view of vacuum molding roll sleeve 800 from end 811b.
FIG. 12 is a schematic depiction of an overhanging feature 1200.
FIG. 13 is a schematic perspective view of a portion of an exhalation airflow sample collection device made using a vacuum process roll sleeve or process described herein.
FIG. 14 is a schematic perspective view of a portion of an exhalation airflow sample collection device made using a vacuum process roll sleeve or process described herein.

Repeated use of reference characters in the specification and drawings is intended to represent the same or analogous features or elements of the disclosure. It should be understood that numerous other modifications and embodiments can be devised by those skilled in the art, which fall within the scope and spirit of the principles of the disclosure. The figures may not be drawn to scale.

### DETAILED DESCRIPTION

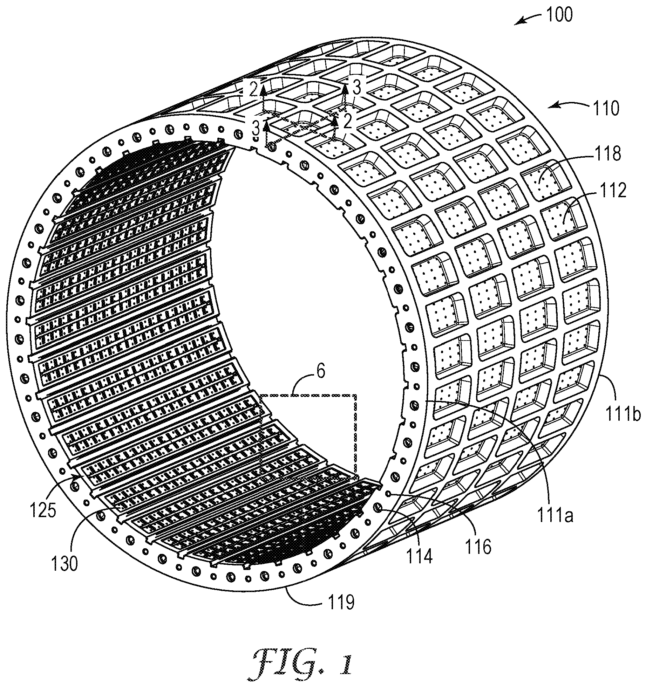

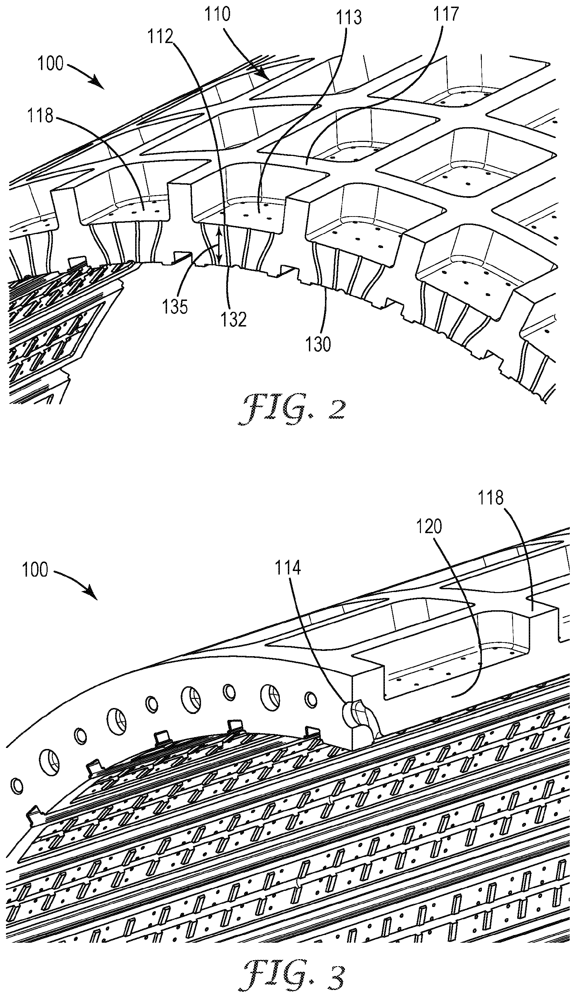

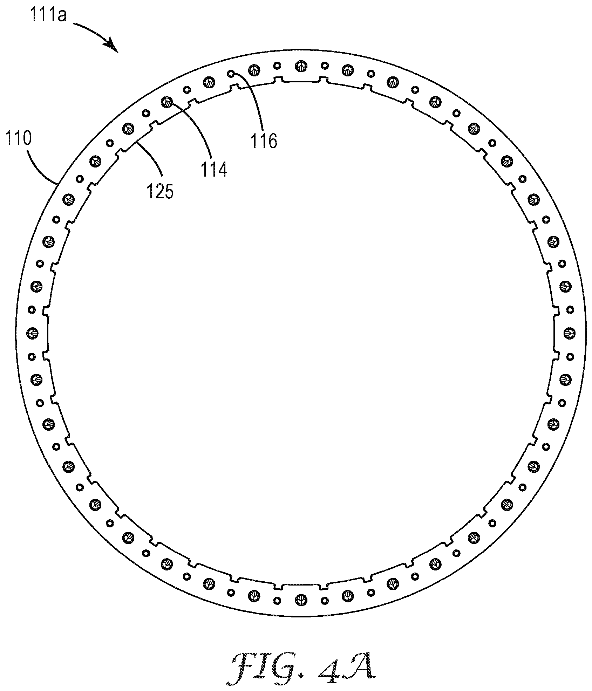

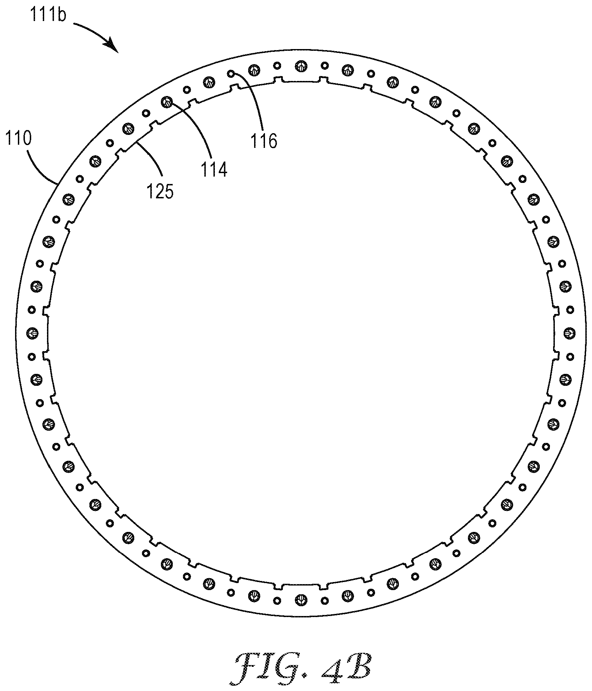

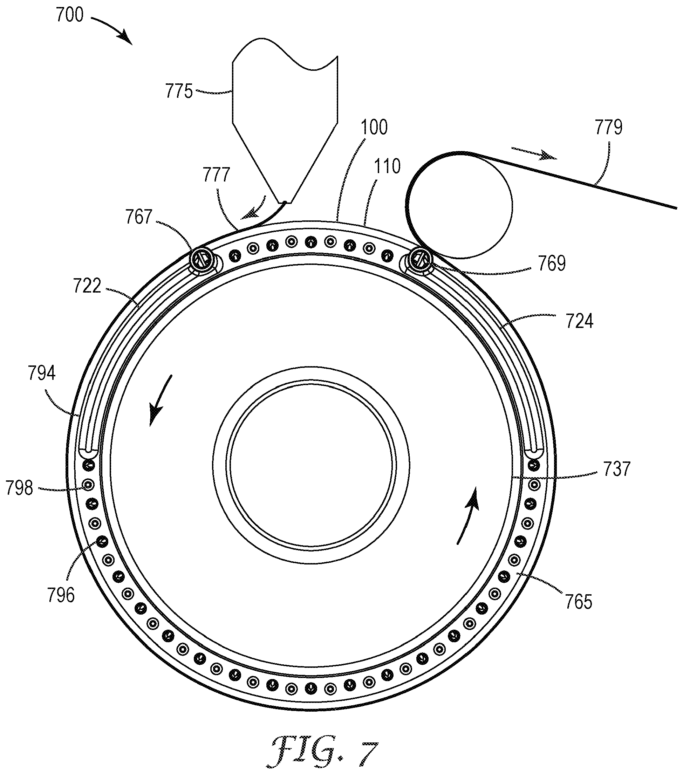

FIGS. 1- 6 show one exemplary embodiment of a vacuum molding roll sleeve 100 according to the present disclosure. Referring now to FIG. 1, vacuum molding roll sleeve 100 comprises a molding surface 110 that is a radially outermost surface of vacuum molding roll sleeve 100 and back surface 125 that is a radially innermost surface. Body 119 comprises mold wall portion 120 (see FIG. 3) disposed between molding surface 110 and vacuum surfaces 130. Vacuum inlet ports 114 (see also FIG. 3) are spaced around first and second identical ends (111a, 111b see also FIGS. 4A and 4B) of vacuum molding roll sleeve 100. Threaded sockets 116 alternate with vacuum inlet ports 114 to allow attachment (e.g., with screws 798) of a vacuum seal ring 765 as shown in FIG. 7).

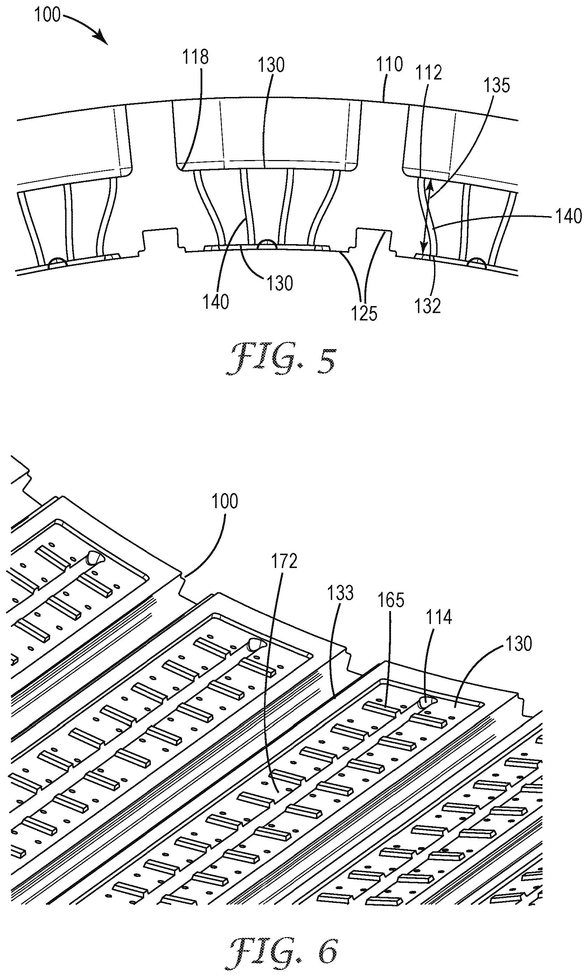

Referring now to FIGS. 2-5, and especially FIG. 5, molding surface 110 has shaped depressed features 118 and first openings 112 disposed at first predetermined positions. Molding surface 110 comprises local maxima 117 and local minima 113. Each first opening 112 is spaced apart from vacuum surface 130 by a respective minimum thickness 135 (i.e., the minimum radial displacement between first opening 112 and vacuum surface 130 for a respective specific conduit 140 having second opening 132. While the specific embodiment shown has a relatively simple design, this aspect of the disclosure may be very important if a highly topographically structured molding surface is used.

Vacuum surfaces 130 have second openings 132 disposed therein at second predetermined positions 134. First openings 112 are fluidly connected to second openings 132 by conduits 140. Vacuum molding roll sleeve 100 is configured such that at least partial vacuum can be applied to the first openings 112 through respective conduits 140 fluidly connected thereto.

Referring now to FIG. 6, vacuum surface 130 and vacuum manifold walls 133, which both form parts of back surface 125 seal the vacuum molding roll sleeve 100 to a backup roll, when mounted thereupon (see FIG. 7), thereby forming vacuum manifolds (not shown). Support ridges 165, which help maintain dimensional stability of the vacuum molding roll sleeve in use, have tops that are the same elevation as the vacuum manifold walls. Vacuum troughs 172 help maintain sufficient vacuum at parts of the vacuum manifolds that are distant from respective vacuum inlet ports 114.

The vacuum molding roll sleeve is mountable on a backup roll which can be used in a vacuum molding process such as, for example, the vacuum extrusion molding process shown in FIG. 7 or an analogous continuous roll thermoforming process. The two processes are similar except that whereas vacuum extrusion molding uses an extruded polymer melt curtain, continuous roll thermoforming process uses a softened (but not molten) polymer film.

In either process the vacuum molding roll sleeve 700 is mounted on rotatable backup roll 737. Backup roll 737 may be expandable (e.g., a hydraulic pressurized backup roll) in order to ensure a snug frictional engagement between the vacuum molding roll sleeve and the backup roll. Other methods for securing the vacuum molding roll sleeve to the backup roll may be used (e.g., mechanical interlocking ridges/slots that securely engage corresponding structures on the backup roll, mechanical fasteners, or adhesive). In use, driving the backup roll causes the vacuum molding roll sleeve to rotate around a common axis. During use, an external vacuum source may be applied to the vacuum ports, thereby evacuating the vacuum manifold in order to facilitate contact between molten or softened polymer and the molding surface.

In FIG. 7 this is accomplished by connecting port 767 of hollow vacuum shoe 722 to external vacuum (not shown). As vacuum molding roll sleeve 100 rotates vacuum inlet port 796 in contact with the hollow vacuum shoe is exposed to vacuum, which in turn evacuates one of more vacuum manifolds and draws the polymer melt curtain 777 from extruder 775 against the molding surface 110 of vacuum molding roll sleeve 100 and into its depressed features (not shown). Normal pressure in returned to each vacuum manifold as their respective vacuum inlet ports pass beyond hollow vacuum shoe 722 and are exposed to atmospheric pressure. Hollow vacuum shoe 722 and hollow pressure shoe 724 (typically duplicated at the opposite end of rotatable backup roll 737) are mounted to an external frame (not shown) and are configured to form a seal with vacuum seal rings 765 which are attached to opposite ends of the vacuum molding roll sleeve 700 by screws 798.

The polymer may be cooled by at least one of cooling the backup roll or blowing air against the molded polymer, for example. As the polymer cools, it becomes dimensionally stable, and eventually passes by hollow pressure shoe 724. Hollow pressure shoe 724 operates in the same manner as hollow vacuum shoe 722, except that positive gas (e.g., air) pressure is applied to pressure port 769 to facilitate separating the now molded polymer film 779 from the molding surface 710 by urging the gas through fluidly connected conduits (not shown) and out associated first openings (not shown).

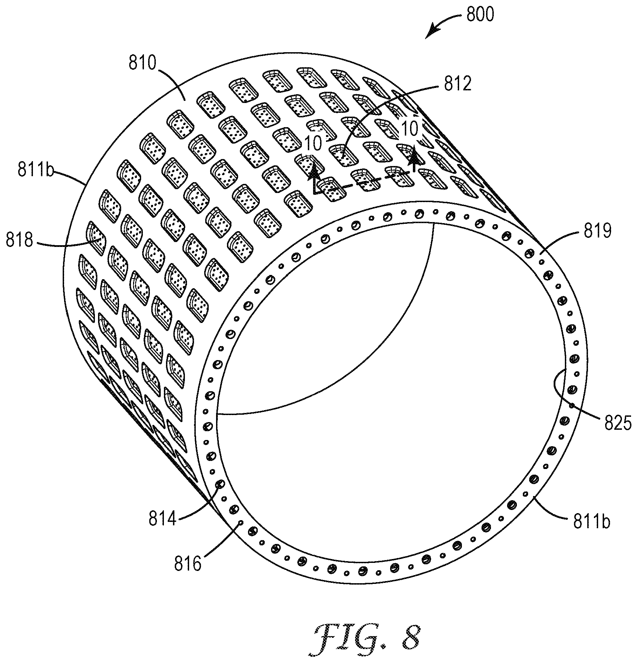

FIGS. 8-11B show another embodiment of an exemplary vacuum molding roll sleeve 800 according to the present disclosure.

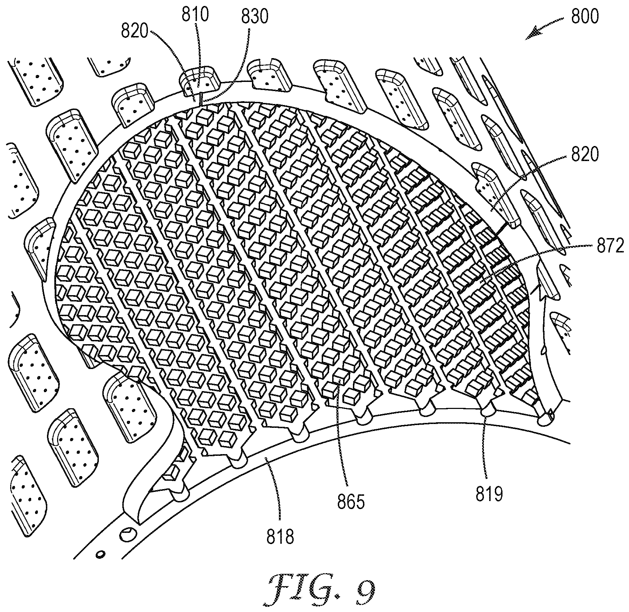

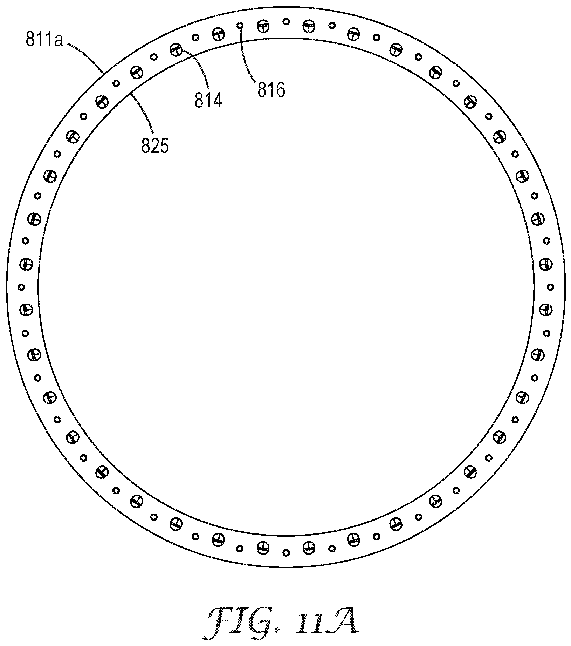

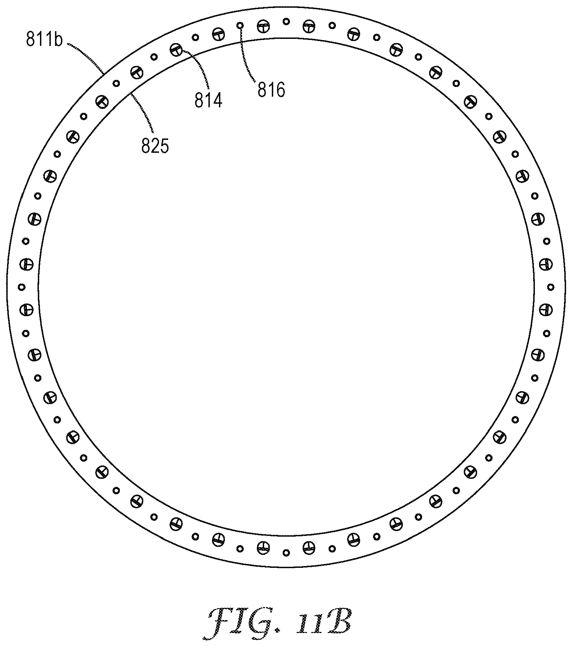

Referring now to FIG. 8, vacuum molding roll sleeve 800 comprises a molding surface 810 that is a radially outermost surface of vacuum molding roll sleeve 800 and a back surface 825 that is radially innermost. Body 818 comprises mold wall portion 820 (see FIG. 9) disposed between molding surface 810 and vacuum surfaces 830. Vacuum inlet ports 814 (see also FIG. 9) are spaced around identical first and second ends (811a, 811b) of vacuum molding roll sleeve 800 shown in FIGS. 11A and 11B. Threaded sockets 816 alternate with vacuum inlet ports 814 to allow attachment (e.g., with screws 798) of a vacuum seal ring 765 as shown in FIG. 7).

Referring again to FIG. 9, support posts 865 in vacuum manifold 872, integrally formed with body 819, help maintain dimensional stability of the vacuum molding roll sleeve 800 in use.

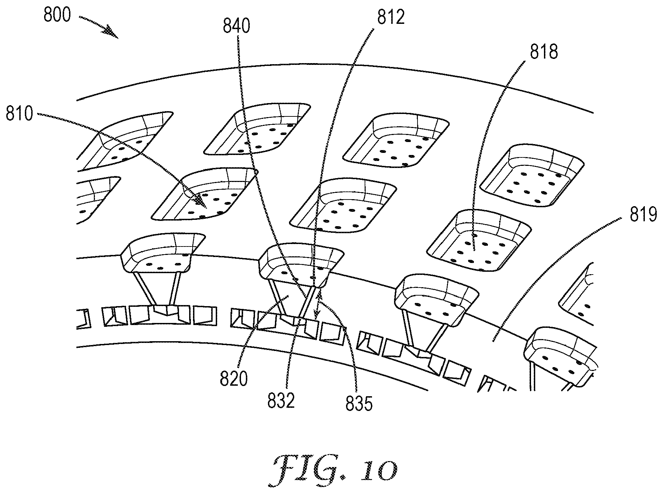

Referring now to FIG. 10, molding surface 810 has shaped depressed features 818 and first openings 812 disposed at first predetermined positions. Each first opening 812 is spaced apart from vacuum surface 830 by a respective minimum thickness 835 (i.e., the minimum radial displacement between first opening 812 and vacuum surface 830. Vacuum surfaces 830 are disposed within the body 819 of vacuum molding roll sleeve 800. Body 819 comprises mold wall portion 820 disposed between molding surface 810 and vacuum surfaces 830. Vacuum surfaces 830 have second openings 832 disposed therein at second predetermined positions. First openings 812 are fluidly connected to second openings 832 by respective conduits 840 (see FIG. 9).

Vacuum molding roll sleeve 800 is configured such that at least partial vacuum can be applied to the first openings 812 through respective conduits 840 fluidly connected thereto and thereby also to vacuum manifolds 856 that are in fluid communication with vacuum inlet ports 814.

Regardless of the embodiment selected, the first and second openings may have any size and or shape (e.g., round, oval, square, triangular, rectangular, or trilobate). Typically, they are of sufficient cross-sectional area that the vacuum draw is sufficiently large to cause softened or molten polymer adjacent to the first openings into intimate contact with the molding surface; however, this is not a requirement. Preferably, they are sufficiently small that softened or molten polymer does not appreciably enter their respective associated conduits under intended process conditions.

Likewise, the first openings are typically arranged according to a predetermined pattern wherein most or all of the depressed features have one or more first openings disposed therein, preferably including at their most depressed locations. Additional first openings disposed at other locations on the molding surface may assist with retaining the molded article in contact with the molding surface (e.g., while cooling) until it is desired to separate it from the molding surface, thereby retaining its molded shape.

Conduits may connect the first and second openings on a one-to-one basis, a one-to many (i.e., at least two) basis, a many-to-one basis, or any combination thereof. A one-to-one relationship of a first and second opening with a respective conduit is common. Conduits may have any internal architecture as long as they terminate at, and fluidly connect, at least one first opening to at least one second opening. For example, conduits may be radially oriented, slanted (i.e., at an angle to a radial orientation), straight, arcuate, convolute, unbranched, branched, or a combination thereof.

At least 20 percent, at least 30 percent, at least 40 percent, at least 50 percent, or even at least 60 percent of the conduits may be longer than the minimum thickness of the mold wall portion at their respective first openings, although this is not a requirement. Relative to distance from the at least one vacuum surface, the molding surface comprises a plurality of local maxima, and local minima. In some embodiments, at least a majority of the local minima have one of the first openings disposed proximate thereto; however, this is not a requirement.

The vacuum molding roll sleeves described herein can be used to form a wide array of shapes and devices in a molded film. One exemplary device that can be formed using the vacuum molding roll sleeve and methods of using it is an exhalation airflow sample collection device of the type generally described in any of U.S. Patent Application Nos. 63/199226 filed on 15 December 2020; 63/200058 filed on 12 February 2021; 63/227498 filed on 30 July 2021; 63/200901 filed on 02 April 2021; 63/227519 filed on 30 July 2021; 63/273300 filed on 29 October 2021; 63/202140 filed on 28 May 2021; 63/227534 filed on 30 July 2021; 63/200958 filed on 06 April 2021; 63/203831 filed on 02 August 2021; 63/201981 filed on 21 May 2021; 63/202143 filed on 28 May 2021; 63/227608 filed on 30 Jul 2021; 63/201983 filed on 21 May 2021; 63/227529 filed on 30 July 2021; 63/260828 filed on 01 September 2021; 63/203441 filed on 22 July 2021; 63/203442 filed on 22 July 2021; 63/306273 filed on 03 February 2022; 63/136723 filed on 13 January 2021; 63/148195 filed on 11 February 2021; 63/222745 filed on 16 July 2021; 63/224242 filed on 21 July 2021; 63/237909 filed on 27 August 2021; 63/255363 filed on 13 October 2021; 63/283075 filed on 24 November 2021; 63/287911 filed on 09 December 2021; 63/142874 filed on 28 January 2021; 63/158153 filed on 08 March 2021; 63/051116 filed on 13 Jul 2020, now published as WO2022015765 A3; 63/029974 filed on 26 May 2020, now published as WO2021242907 A1.

Sample collection devices of this type generally include a porous sample collection media disposed within a device housing and along an airflow channel defined by the device housing. The user may exhale into the sample collection device and load the porous sample collection media with a sample of the exhalation airflow to form a loaded porous sample collection media. In some embodiments, a fluid is passed through the porous sample collection media (e.g., metered dose of fluid) and carries away pathogen or virus that may be bound to the porous sample collection media. The fluid may then be analyzed.

In some embodiments, the housing includes a first part and a second part that cooperate to define an airflow path. In some embodiments, the first and second parts of the housing are removably coupled with one another. In an alternative embodiment, the first and second parts are permanently coupled with one another such that the parts cannot be separated without breaking or deforming. The first and second parts may be coupled with any suitable mechanism. For example, the first and second parts may be coupled by bayonet coupling, interference fit, snap fit, or threaded coupling. In one embodiment, the first and second parts are coupled by bayonet coupling. When configured for bayonet coupling, the first part may include one or more protrusions and the second part may include one or more corresponding grooves constructed to receive and guide the one or more protrusions. Alternatively, the one or more protrusions may be on the second part and the one or more grooves may be on the first part.

The first piece has a proximal end and an opposite distal end. The proximal end may form a mouthpiece. The second piece has a proximal end and an opposing distal end. The first and second pieces are capable of coupling with one another.

According to an exemplary embodiment, the housing has a longitudinal center axis. The airflow channel extends through both the first and the second part. The airflow channel may extend along the longitudinal center axis. One or both of the first and second parts may include a tubular, quadrilateral, rectangular, or cylindrical body. When the first and second parts are coupled, the tubular, quadrilateral, rectangular, or cylindrical bodies may be coaxial.

In some embodiments, one of the first or second piece may also include any suitable mechanism for coupling with a sample collection tube. For example, the one of the ends of the first or second pieces may by constructed for bayonet coupling, interference fit, snap fit, or threaded coupling. Many commercially available sample collection tubes or test tubes have a threaded top for attaching a cap. The tube coupling end of the second part may be constructed to couple with the threads of the sample collection tube. The tube coupling end of the second part may include internal threading configured to couple with the external threading of the sample collection tube. The tube coupling end of the second part may include two or more different threads having different configurations (e.g., size, spacing of threads, or angle of threads) to provide attachment for different types or sizes of the sample collection tubes. In some embodiments, the tube coupling end of the second part is configured for an interference fit with a sample collection tube. To facilitate an interference fit, the tube coupling end may include a protrusion sized to be received inside a sample collection tube.

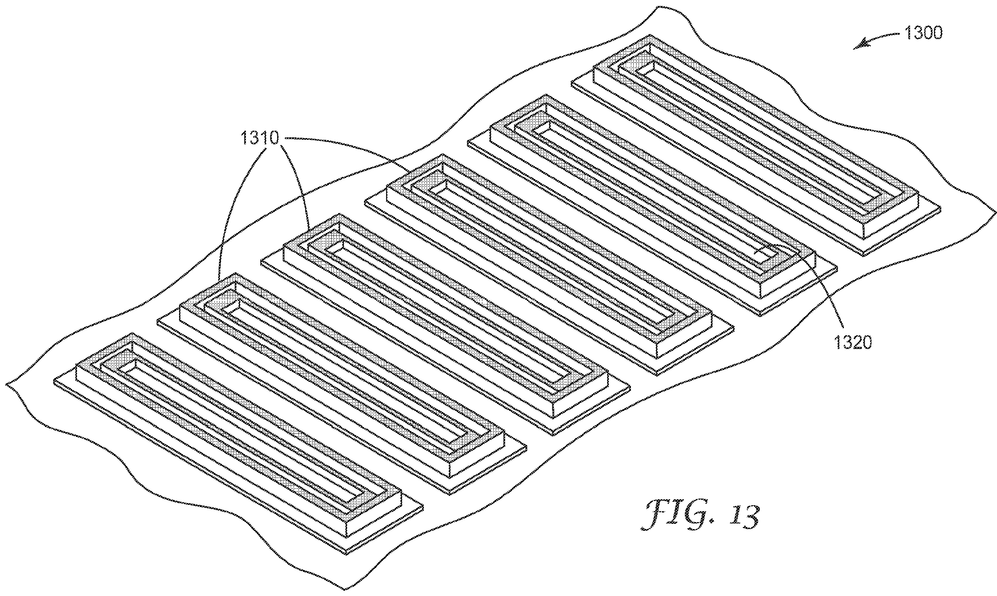

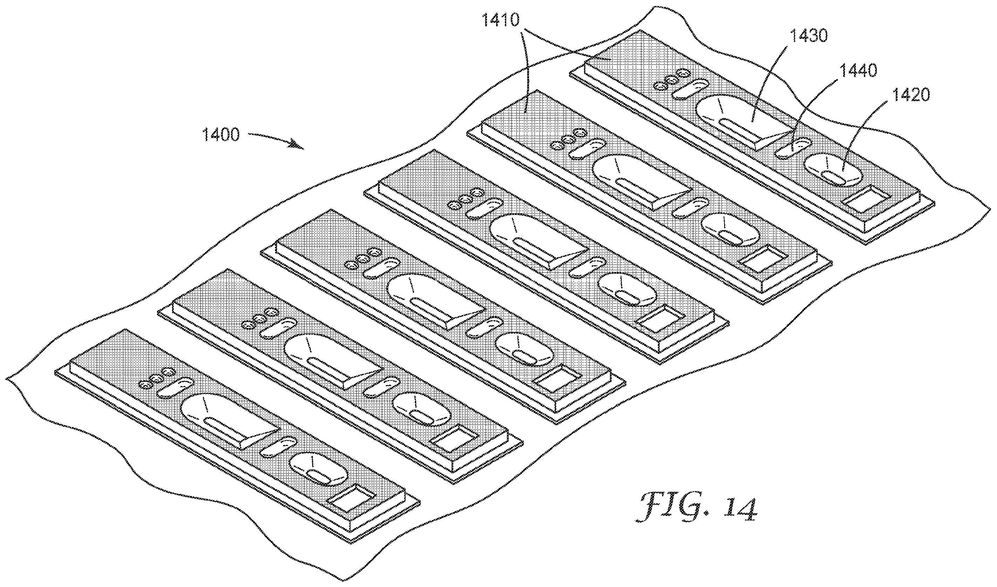

One exemplary implementation is shown in FIGS. 13 and 14. FIG. 13 shows a first molded film 1300 including a spaced-apart row of a first piece 1310 of a housing that, when fitted with the second piece of the housing, forms a sample collection device of the type described in the applications listed above. First piece 1310 of FIG. 13 is generally rectangular in shape and includes an elongated rectangular inset or well 1320 into which a lateral or vertical flow assay (LFA or VFA, respectively) may be placed. As such, the depth of the inset or well should be at least twice the thickness of an LFA or VFA.

FIG. 14 shows second molded film 1400 including a spaced-apart row a second piece 1410 of a housing that, when fitted with the second piece of the housing, forms a sample collection device of the type described in the applications listed above. Second piece 1410 includes an exhalation aperture 1420 through which a user may exhale, and an indicator aperture 1430 through which the user can see the results of a test. Second piece may also include a liquid receipt aperture 1440 through which the liquid may enter the housing, or the liquid can enter the housing through the exhalation aperture 1420.

Vacuum molding roll sleeves can be made by any suitable technique. In many instances an additive manufacturing (AM) technique is preferred and/or necessary. In such cases, the body of the vacuum molding roll sleeve is often unitary, although this is not a requirement.

In typical additive manufacturing, objects are fabricated by sequentially depositing a material layer-upon-layer. The material may comprise an organic polymer (e.g., a crosslinked polymer or a thermoplastic), metal, or ceramic, for example.

Common to additive manufacturing technologies is the use of a computer, three-dimensional (3D) modeling software (also known as Computer Aided Design (CAD)), machine equipment and a layering material. Once a CAD sketch is produced, the AM equipment reads in data from the CAD file and lays downs or adds successive layers of liquid, powder, sheet material or other, in a layer-upon-layer fashion to fabricate a 3D object. Techniques of additive manufacturing include, for example, vat photopolymerization, material extrusion, powder bed fusion, material jet printing, binder jet printing, directed energy deposition, and sheet lamination.

Of these, vat polymerization, has been found to be particularly applicable to vacuum molding roll sleeve fabrication. Vat polymerization uses a vat of liquid photopolymer resin, out of which the model is constructed layer by layer. An ultraviolet (UV) light is used to cure or harden the resin where required, whilst a platform moves the object being made downwards after each new layer is cured. Regardless of the selected method, the vacuum molding roll sleeve (and also its molding surface) comprises conjoined discrete layers of a material, which will generally be apparent upon close inspection.

As the process uses photopolymerizable liquid to form objects, there is no structural support from the material during the build phase., unlike powder based methods, where support is given from the unbound material. In such cases, support structures often need to be added. Photopolymerizable liquids are cured using a process of photopolymerization where light (e.g., ultraviolet and/or visible light) is directed across the surface of the resin with the use of motor controlled mirrors. Where the resin comes in contact with the light, it polymerizes and hardens forming a crosslinked organic polymer, typically a crosslinker acrylic polymer.

A typical general process is as follows:
1. A build platform is lowered from the top of a vat of photopolymerizable liquid downwards by the thickness of a single thin layer.
2. A UV light cures the resin layer according to a predetermined pattern. The platform continues to move downwards and additional layers are built on top of the previous layer.
3. After completion or multiple cycles the object is fabricated, the vat is drained of photopolymerizable liquid and the object is removed.

Specific types of vat photopolymerization include stereolithography (SLA), digital light processing (DLP), continuous liquid interface production (CLIP), and Daylight polymer Processing (DLP).

During the SLA manufacturing process, a concentrated beam of ultraviolet light or a laser is focused onto the surface of a vat filled with a liquid photopolymer. The beam or laser is focused, creating each layer of the desired 3D object by means of crosslinking monomer or degrading a polymer.

For DLP processes, a digital projector screen is used to flash a single image of each layer across the entire platform at once. Because the projector is a digital screen, the image of each layer is composed of square pixels, resulting in a layer formed from small rectangular bricks called voxels. DLP can achieve faster print times for some parts, as each entire layer is exposed all at once, rather than drawn out with a laser.

The CLIP vat photopolymerization technique uses a tank of resin as base material. Part of the vat bottom is transparent to ultraviolet light, and therefore called the window. An ultraviolet light beam shines through the window, illuminating the precise cross-section of the object. The light causes the resin to solidify (photopolymerize). The object rises slowly enough to allow resin to flow under and maintain contact with the bottom of the object. An oxygen-permeable membrane lies below the resin, which creates a dead zone. This persistent liquid interface prevents the resin from attaching to the window, which means the photopolymerization is inhibited between the window and the object being fabricated. Unlike standard SLA, the 3D printing process is continuous and claims to be up to 100 times faster than commercial 3D printing methods.

Instead of using a laser or a projector to cure the polymer, the DPP manufacturing process uses an LCD (Liquid Crystal Display).

Suitable materials and techniques are known in the art and are available, for example, from additive manufacturing equipment suppliers. Contract manufacturing companies also can fabricate parts when supplied with an appropriate digital CAD file of the part to be made.

In embodiments using vat polymerization, the resultant object produced generally comprises a crosslinked organic polymer. If material extrusion is used, the object may comprise a thermoplastic organic polymer. Of the two, crosslinked organic polymers are generally better suited for vacuum molding roll sleeve fabrication since they are not thermoplastic and prone to heat distortion.

Examples of suitable polymerizable materials for use in vat polymerization include methacrylate-based and/or acrylate-based monomers such as polyethylene glycol diacrylate (PEGDA), triethylene glycol dimethacrylate (TEGDMA), biphenol A-glycidyl methacrylate (Bis-GMA), trimethylolpropane triacrylate (TTA), flexible aliphatic urethane dimethacrylate (UDMA) which has the structural formula, 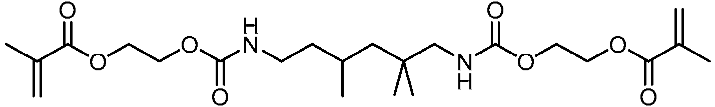 and bisphenol A ethoxylate diacrylate (Bis-EDA) which has the structural formula, 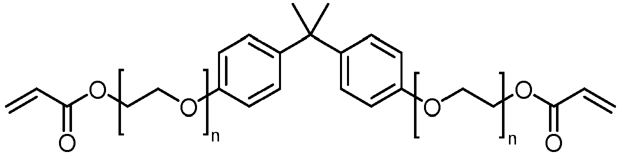 wherein n is an integer greater than or equal to 1. Useful free-radical polymerization photoinitiators are well known in the art and include, for example, 2-hydroxy-2-methyl-1-phenyl-propan-1-one, 2,2-dimethoxy-2-phenylacetophenone, phenyl bis(2,4,6-trimethylbenzyl)phosphine oxide, 2-hydroxy-2-methyl, -1-phenylpropan-1-one, and ethyl (2,4,6-trimethylbenzoyl)phenylphosphinate.

Other polymerizable systems include thiol-ene and thiol-yne polymerizable systems and cationically polymerizable epoxy monomer systems.

Further details concerning vat polymerization are well known, and are described, for example, by Bagheri et al. in "Photopolymerization in 3D printing", ACS Applied Polymer Materials, 2019, vol. 1, pp. 591-611 and Pagac et al. in "A Review of Vat Photopolymerization Technology: Materials, Applications, Challenges, and Future Trends of 3D Printing", Polymers, 2021, vol. 13, pp. 598 - 618 and references contained therein.

In one embodiment, a CAD template for a vacuum molding roll sleeve can be generated. In such cases, a regularly spaced array of radially oriented conduits is often used. All design elements in the CAD template are present except that the molding surface is featureless. Once a desired structure is applied to the molding surface software may relocate first openings to correspond to local minima in the molding surface. This may greatly reduce the CAD design time required to generate new rolls.

It is preferably to build the vacuum molding roll sleeve such that it is standing on its end either as a monolith or as modular sections that can be assembled to form the entire roll. This way, the need for supporting structures can be reduced or eliminated.

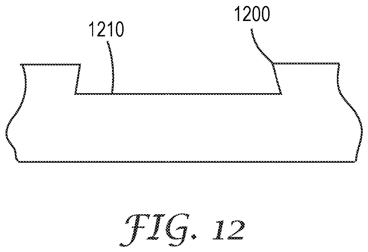

Advantageously, by using additive manufacturing it is possible to fabricate complex interior features (e.g., vacuum manifolds, supports, conduits, and molding surfaces (e.g., molding surfaces with overhanging features). Overhanging features typically impair access to portions of the molding surface directly below them, and are difficult to make using more traditional technologies such as engraving. An example of an overhanging feature is shown in FIG. 12 in which feature 1200 radially overhangs a portion of a molding surface 1210.

The preceding description, given in order to enable one of ordinary skill in the art to practice the claimed disclosure, is not to be construed as limiting the scope of the disclosure, which is defined by the claims.

## Claims

1. A vacuum molding roll sleeve (100, 800, 700) comprising:
a molding surface (110, 710, 810, 1210) that is a radially outermost surface of the vacuum molding roll sleeve and
a back surface (125, 825) that is a radially innermost surface,
a body (119, 818, 819) comprising a mold wall portion (120, 820) disposed between the molding surface (110, 710, 810, 1210) and at least one vacuum surface (130, 830),
wherein the molding surface (110, 710, 810, 1210) has shaped depressed features (118, 818),
wherein the molding surface (110, 710, 810, 1210) has first openings (112, 812) disposed therein at first predetermined positions,
wherein each first opening (112, 812) is spaced apart from the at least one vacuum surface (130, 830) by a respective minimum thickness (135, 835),
wherein the at least one vacuum surface (130, 830) has second openings (132, 832) disposed therein at second predetermined positions (134),
wherein the first openings (112, 812) are fluidly connected to the second openings (132, 832) by conduits (140, 840),
wherein, on a respective basis, at least some of the conduits (140, 840) are longer than the minimum thickness (135, 835) between the first openings (112, 812) and the vacuum surface (130, 830),
wherein the vacuum molding roll sleeve (100, 800, 700) is configured such that at least partial vacuum can be applied to the first openings (112, 812) through the conduits (140, 840) fluidly connected thereto, and
wherein the vacuum molding roll sleeve (100, 800, 700) is mountable on a backup roll (737).

2. The vacuum molding roll sleeve of claim 1, further comprising at least one vacuum manifold in fluid communication with the at least one vacuum surface, wherein each of the at least one vacuum manifold comprises at least one vacuum port disposed on at least one end of the vacuum molding roll sleeve and fluidly connected to the at least one vacuum manifold, wherein the at least one vacuum manifold is disposed within the vacuum molding roll sleeve.

3. The vacuum molding roll sleeve of claim 1, further comprising a back surface opposite the molding surface, wherein the at least one vacuum surface forms a portion of the back surface, wherein a raised portion of the back surface encircles the at least one vacuum surface and, if the vacuum molding roll sleeve is mounted on the backup roll, forms at least one vacuum manifold in fluid communication with the at least one vacuum surface, and wherein at least one vacuum port is disposed on at least one end of the vacuum molding roll sleeve and fluidly connected to the at least one vacuum manifold.

4. The vacuum molding roll sleeve of any of claims 1 to 3, wherein between 20 and 60 percent of the conduits are longer than the minimum thickness of the mold wall portion at their respective first openings.

5. The vacuum molding roll sleeve of any of claims 1 to 4, wherein at least some of the conduits are one of straight, not straight, not branched and branched.

6. The vacuum molding roll sleeve of any of claims 1 to 5, wherein the molding surface comprises overhanging features.

7. The vacuum molding roll sleeve of any of claims 1 to 6, wherein the vacuum molding roll sleeve comprises organic polymer, wherein the organic polymer is crosslinked.

8. The vacuum molding roll sleeve of any of claims 1 to 7, wherein at least the molding surface comprises conjoined discrete layers of a material.

9. The vacuum molding roll sleeve of any of claims 1 to 8, wherein, relative to distance from the at least one vacuum surface, the molding surface comprises a plurality of local maxima and local minima, and wherein at least a majority of the local minima has one of the first openings disposed proximate thereto.

10. A method of making the vacuum molding roll sleeve of any of claims 1 to 9, the method comprising using an additive manufacturing technique to generate the vacuum molding roll sleeve according to a predetermined design.

11. The method of claim 10, wherein the additive manufacturing technique is selected from the group consisting of vat photopolymerization, material extrusion, powder bed fusion, material jet printing, binder jet printing, directed energy deposition, and sheet lamination.

12. The method of using the vacuum molding roll sleeve of any of claims 1 to 11, the method comprising
introducing a molten thermoplastic polymer onto the molding surface of the vacuum molding roll sleeve while applying vacuum to the at least one vacuum surface; and
separating a molded article from the molding surface under conditions such that the molded article has a shaped surface that is a substantial inverse of at least a portion of the molding surface.

13. The method of claim 12, further comprising cooling the molded article to at least a temperature wherein it is dimensionally stable prior to said separating the molded article from the molding surface.

14. The method of claim 12 or 13, further comprising urging gas from some of the conduits through some of the first openings during said separating the molded article from the molding surface.

15. The method of any of claims 12 to 14, wherein the molded article includes one or more portions of a sample collection device.

## Patentansprüche

1. Eine Vakuumformwalzenhülle (100, 800, 700) aufweisend:
eine Formoberfläche (110, 710, 810, 1210), die eine radial äußerste Oberfläche der Vakuumformwalzenhülle ist und
eine rückseitige Oberfläche (125, 825), die eine radial innerste Oberfläche ist,
einen Körper (119, 818, 819), aufweisend einen Formwandabschnitt (120, 820), der zwischen der Formoberfläche (110, 710, 810, 1210) und mindestens einer Vakuumoberfläche (130, 830) angeordnet ist,
wobei die Formoberfläche (110, 710, 810, 1210) geformte, vertiefte Merkmale (118, 818) aufweist,
wobei die Formoberfläche (110, 710, 810, 1210) erste Öffnungen (112, 812) aufweist, die darin an ersten vorab festgelegten Positionen angeordnet sind,
wobei jede erste Öffnung (112, 812) von der mindestens einen Vakuumoberfläche (130, 830) um eine jeweilige Mindestdicke (135, 835) beabstandet ist,
wobei die mindestens eine Vakuumoberfläche (130, 830) zweite Öffnungen (132, 832) aufweist, die darin an zweiten vorab festgelegten Positionen (134) angeordnet sind,
wobei die ersten Öffnungen (112, 812) mit den zweiten Öffnungen (132, 832) durch Leitungen (140, 840) fluidisch verbunden sind,
wobei, auf einer jeweilige Basis, mindestens einige der Leitungen (140, 840) länger als die Mindestdicke (135, 835) zwischen den ersten Öffnungen (112, 812) und der Vakuumoberfläche (130, 830) sind,
wobei die Vakuumformwalzenhülle (100, 800, 700) derart konfiguriert ist, dass mindestens ein Teilvakuum an die ersten Öffnungen (112, 812) durch die Leitungen (140, 840), die daran fluidisch verbunden sind, angelegt werden kann, und
wobei die Vakuumformwalzenhülle (100, 800, 700) auf einer Stützwalze (737) montierbar ist.

2. Die Vakuumformwalzenhülle nach Anspruch 1, ferner aufweisend mindestens einen Vakuumverteiler in Fluidkommunikation mit der mindestens einen Vakuumoberfläche aufweist, wobei jeder der mindestens einen Vakuumverteiler mindestens einen Vakuumanschluss aufweist, der an mindestens einem Ende der Vakuumformwalzenhülle angeordnet ist und mit dem mindestens einen Vakuumverteiler fluidisch verbunden ist, wobei der mindestens eine Vakuumverteiler innerhalb der Vakuumformwalzenhülle angeordnet ist.

3. Die Vakuumformwalzenhülle nach Anspruch 1, ferner aufweisend eine rückseitige Oberfläche gegenüberliegend zu der Formoberfläche, wobei die mindestens eine Vakuumoberfläche einen Abschnitt der rückseitige Oberfläche bildet, wobei ein erhöhter Abschnitt der rückseitigen Oberfläche die mindestens eine Vakuumoberfläche umgibt und, falls die Vakuumformwalzenhülle auf der Stützwalze montiert ist, mindestens einen Vakuumverteiler in Fluidkommunikation mit der mindestens einen Vakuumfläche bildet, und wobei mindestens ein Vakuumanschluss auf mindestens einem Ende der Vakuumformwalzenhülle angeordnet und mit dem mindestens einen Vakuumverteiler fluidisch verbunden ist.

4. Die Vakuumformwalzenhülle nach einem der Ansprüche 1 bis 3, wobei zwischen 20 und 60 Prozent der Leitungen länger als die Mindestdicke des Formwandabschnitts an ihren jeweiligen ersten Öffnungen sind.

5. Die Vakuumformwalzenhülle nach einem der Ansprüche 1 bis 4, wobei mindestens einige der Leitungen eines von gerade, nicht gerade, nicht verzweigt oder verzweigt sind.

6. Die Vakuumformwalzenhülle nach einem der Ansprüche 1 bis 5, wobei die Formoberfläche überhängende Merkmale aufweist.

7. Die Vakuumformwalzenhülle nach einem der Ansprüche 1 bis 6, wobei die Vakuumformwalzenhülle ein organisches Polymer aufweist, wobei das organische Polymer vernetzt ist.

8. Die Vakuumformwalzenhülle nach einem der Ansprüche 1 bis 7, wobei mindestens die Formoberfläche aus verbundenen diskreten Schichten eines Materials besteht.

9. Die Vakuumformwalzenhülle nach einem der Ansprüche 1 bis 8, wobei, relativ zu dem Abstand von der mindestens einen Vakuumoberfläche, die Formoberfläche eine Mehrzahl von lokalen Maxima und lokalen Minima aufweist, und wobei mindestens eine Mehrzahl der lokalen Minima eine der ersten Öffnungen, die dort in der Nähe angeordnet sind, aufweist.

10. Ein Verfahren zum Herstellen der Vakuumformwalzenhülle nach einem der Ansprüche 1 bis 9, das Verfahren aufweisend ein Verwenden einer additiven Fertigungstechnik, um die Vakuumformwalzenhülle nach einem vorab festgelegten Entwurf zu erzeugen.

11. Das Verfahren nach Anspruch 10, wobei die additive Fertigungstechnik aus der Gruppe ausgewählt wird, bestehend aus Wannenphotopolymerisation, Materialextrusion, Pulverbettfusion, Materialstrahldruck, Binderstrahldruck, gerichteter Energieabscheidung und Folienlaminierung.

12. Das Verfahren zum Verwenden der Vakuumformwalzenhülle nach einem der Ansprüche 1 bis 11, das Verfahren aufweisend:
Einbringen eines geschmolzenen thermoplastischen Polymers auf die Formoberfläche der Vakuumformwalzenhülle, während eines Anlegens des Vakuums auf die mindestens eine Vakuumoberfläche; und
Trennen eines Formgegenstands von der Formoberfläche unter Bedingungen, derart, dass der Formgegenstand eine geformte Oberfläche aufweist, die im Wesentlichen invertiert von mindestens einem Abschnitt der Formoberfläche ist.

13. Das Verfahren nach Anspruch 12, ferner aufweisend ein Abkühlen des Formgegenstands auf mindestens eine Temperatur, wobei er vor dem Trennen des Formgegenstands von der Formoberfläche formstabil ist.

14. Das Verfahren nach Anspruch 12 oder 13, ferner aufweisend ein Drängen von Gas aus einigen der Leitungen durch einige der ersten Öffnungen während des Trennens des Formgegenstands von der Formoberfläche.

15. Das Verfahren nach einem der Ansprüche 12 bis 14, wobei der Formartikel einen oder mehrere Abschnitte einer Probenentnahmevorrichtung einschließt.

## Revendications

1. Manchon de rouleau de moulage sous vide (100, 800, 700) comprenant :
une surface de moulage (110, 710, 810, 1210) qui est une surface radialement la plus extérieure du manchon de rouleau de moulage sous vide et
une surface arrière (125, 825) qui est une surface radialement la plus intérieure,
un corps (119, 818, 819) comprenant une partie de paroi de moule (120, 820) disposée entre la surface de moulage (110, 710, 810, 1210) et au moins une surface de vide (130, 830),
dans lequel la surface de moulage (110, 710, 810, 1210) possède des éléments formés en creux (118, 818),
dans lequel la surface de moulage (110, 710, 810, 1210) possède de premières ouvertures (112, 812) disposées dans celle-ci à de premières positions prédéterminées,
dans lequel chaque première ouverture (112, 812) est séparée de l'au moins une surface de vide (130, 830) par une épaisseur minimale respective (135, 835),
dans lequel l'au moins une surface de vide (130, 830) possède de secondes ouvertures (132, 832) disposées dans celle-ci à de secondes positions prédéterminées (134),
dans lequel les premières ouvertures (112, 812) sont en communication fluidique avec les secondes ouvertures (132, 832) par des conduits (140, 840),
dans lequel, sur une base respective, au moins certains des conduits (140, 840) sont plus longs que l'épaisseur minimale (135, 835) entre les premières ouvertures (112, 812) et la surface de vide (130, 830),
dans lequel le manchon de moulage sous vide (100, 800, 700) est conçu de manière à ce qu'un vide au moins partiel puisse être appliqué aux premières ouvertures (112, 812) par l'intermédiaire des conduits (140, 840) en communication fluidique avec celles-ci, et
dans lequel le manchon de rouleau de moulage sous vide (100, 800, 700) peut être monté sur un rouleau de support (737).

2. Manchon de rouleau de moulage sous vide selon la revendication 1, comprenant en outre au moins un collecteur de vide en communication fluidique avec l'au moins une surface de vide, dans lequel chacun de l'au moins un collecteur de vide comprend au moins un orifice de vide disposé sur au moins une extrémité du manchon de rouleau de moulage sous vide et en communication fluidique avec l'au moins un collecteur de vide, dans lequel l'au moins un collecteur de vide est disposé à l'intérieur du manchon de rouleau de moulage sous vide.

3. Manchon de rouleau de moulage sous vide selon la revendication 1, comprenant en outre une surface arrière opposée à la surface de moulage, dans lequel l'au moins une surface de vide forme une partie de la surface arrière, dans lequel une partie surélevée de la surface arrière encercle l'au moins une surface de vide et, si le manchon de rouleau de moulage sous vide est monté sur le rouleau de support, forme au moins un collecteur de vide en communication fluide avec l'au moins une surface de vide, et dans lequel au moins un orifice de vide est disposé sur au moins une extrémité du manchon de rouleau de moulage sous vide et en communication fluidique avec l'au moins un collecteur de vide.

4. Manchon de moulage sous vide selon l'une quelconque des revendications 1 à 3, dans lequel entre 20 et 60 % des conduits sont plus longs que l'épaisseur minimale de la partie de paroi de moule au niveau de leurs premières ouvertures respectives.

5. Manchon de rouleau de moulage sous vide selon l'une quelconque des revendications 1 à 4, dans lequel au moins certains des conduits sont l'un parmi droits, non droits, non ramifiés et ramifiés.

6. Manchon de rouleau de moulage sous vide selon l'une quelconque des revendications 1 à 5, dans lequel la surface de moulage comprend des éléments en surplomb.

7. Manchon de rouleau de moulage sous vide selon l'une quelconque des revendications 1 à 6, dans lequel le manchon de rouleau de moulage sous vide comprend un polymère organique, dans lequel le polymère organique est réticulé.

8. Manchon de moulage sous vide selon l'une quelconque des revendications 1 à 7, dans lequel au moins la surface de moulage comprend des couches individuelles conjointes d'un matériau.

9. Manchon de moulage sous vide selon l'une quelconque des revendications 1 à 8, dans lequel, par rapport à une distance de l'au moins une surface de vide, la surface de moulage comprend une pluralité de maxima locaux et de minima locaux, et dans lequel au moins une majorité des minima locaux a l'une des premières ouvertures disposées à proximité de celle-ci.

10. Procédé de fabrication du manchon de rouleau de moulage sous vide selon l'une quelconque des revendications 1 à 9, le procédé comprenant l'utilisation d'une technique de fabrication additive pour générer le manchon de rouleau de moulage sous vide conformément à une conception prédéterminée.

11. Procédé selon la revendication 10, dans lequel la technique de fabrication additive est choisie dans le groupe constitué par la photopolymérisation en cuve, l'extrusion de matériau, la fusion sur lit de poudre, l'impression par jet de matériau, l'impression par jet de liant, le dépôt d'énergie dirigée, et le laminage de feuilles.

12. Procédé d'utilisation du manchon de moulage sous vide selon l'une quelconque des revendications 1 à 11, comprenant
l'introduction d'un polymère thermoplastique fondu sur la surface de moulage du manchon de moulage sous vide tout en appliquant un vide à l'au moins une surface de vide ; et
la séparation d'un article moulé de la surface de moulage dans des conditions telles que l'article moulé présente une surface façonnée qui est sensiblement l'inverse d'au moins une partie de la surface de moulage.

13. Procédé selon la revendication 12, comprenant en outre le refroidissement de l'article moulé à au moins une température à laquelle il est dimensionnellement stable avant la séparation de l'article moulé de la surface de moulage.

14. Procédé selon la revendication 12 ou 13, comprenant en outre l'expulsion de gaz de certains des conduits à travers certaines des premières ouvertures pendant ladite séparation de l'article moulé de la surface de moulage.

15. Procédé selon l'une quelconque des revendications 12 à 14, dans lequel l'article moulé comporte une ou plusieurs parties d'un dispositif de collecte d'échantillons.
